# EUROPEAN PATENT APPLICATION

(11) **EP 2 418 837 A2**
(43) Date of publication of application: **15.02.2012**
(21) Application number: 11176007.0
(22) Date of filing: 29.07.2011
(51) Int. Cl.: H04N 1/00, H04N 101/00

(54) **Method, apparatus, and system for workflow participation of an imaging device**

(30) Priority: 10.08.2010 US 853910
(71) Applicant: Ricoh Company, Ltd., Tokyo 143-8555 (JP); Ricoh Americas Corporation, West Caldwell NJ 07006 (US)
(72) Inventor: Keys, Gregory C., West Caldwell, NJ New Jersey 07006 (US)
(74) Representative: White, Duncan Rohan

(57) **Abstract**

A method, apparatus, and system for communicating between an apparatus hosting a workflow application (200) and an imaging device (100), the system including a state engine (210) configured to read and extract data from a first message received from the imaging device (100), to communicate with an application component (220), and to advance to a workflow state, a state translator (230) configured to receive the workflow state from the state engine (210), to convert the workflow state into an imaging device instruction, and to send the imaging device instruction to the imaging device (100), a state instantiater (160) configured to change a state of a component of the imaging device (100) in accordance with the imaging device instruction, an event responder (150) configured to assemble data in a second message based on the changed state of the component of the imaging device (100), and an interface (170) configured to send the second message to the apparatus.

## Description

### BACKGROUND

### FIELD OF THE INVENTION

The present disclosure relates to workflow communication between an imaging device and a workflow application.

### DESCRIPTION OF THE RELATED ART

A "workflow" generally relates to an automated process during which information, usually in the form of documents, or tasks are communicated from one participant to another, based on some trigger, for their action set forth by a set of procedural rules. A "workflow application" is a computer software or online-based program that is used to more efficiently manage all or part of a process that would otherwise not be automated. A process is usually business-related, but it may be any process that requires a series of steps that can be automated via software. Some steps of the process may require human intervention, such as an approval or the development of custom text, but functions that can be automated may be handled by the application.

### SUMMARY

A method, apparatus, and system for communicating between an apparatus hosting a workflow application and an imaging device, the system including a state engine, at the apparatus, configured to read and extract data from a first message received from the imaging device, to communicate with an application component, and to advance to a workflow state, a state translator, at the apparatus, configured to receive the workflow state from the state engine, to convert the workflow state into an imaging device instruction, and to send the imaging device instruction to the imaging device, a state instantiater, at the imaging device, configured to change a state of a component of the imaging device in accordance with the imaging device instruction, an event responder, at the imaging device, configured to assemble data in a second message based on the changed state of the component of the imaging device, and an interface, at the imaging device, configured to send the second message to the apparatus.

As should be apparent, a number of advantageous features and benefits are available by way of the disclosed embodiments and extensions thereof. It is to be understood that any embodiment can be constructed to include one or more features or benefits of embodiments disclosed herein, but not others. Accordingly, it is to be understood that the embodiments discussed herein are provided as examples and are not to be construed as limiting, particularly since embodiments can be formed to practice the invention that do not include each of the features of the disclosed examples.

### BRIEF DESCRIPTION OF THE DRAWINGS

The disclosure will be better understood from reading the description which follows and from examining the accompanying figures. These are provided solely as non-limiting examples of embodiments. In the drawings:
Figure 1 shows an embodiment of the present disclosure;
Figure 2 shows an embodiment of the camera workflow processor;
Figure 3 shows a Camera State Language (CSL);
Figure 4 shows a Camera State Instruction (CSI);
Figure 5 shows a relationship between components of the present disclosure;
Figure 6 shows an embodiment of the present disclosure;
Figure 7 is a flow diagram of a communication between a camera and a workflow application;
Figure 8 illustrates an embodiment of a sequence of events after the CSI is received by the computer workflow processor;
Figure 9 illustrates an embodiment of a sequence of events after the CSI is received by the computer workflow processor;
Figure 10 illustrates an embodiment of a sequence of steps of processing data input from the event responder; and
Figure 11 illustrates a computer system upon which an embodiment of the present disclosure may be implemented.

### DETAILED DESCRIPTION

The present disclosure describes a method, apparatus, system, and computer readable medium for using an imaging device, such as a digital camera (or plurality of cameras), as a workflow client in a workflow application. Each step of a workflow may be completed on the camera, and the outcome of each of the workflow steps is sent to a workflow application which processes the outcome. The workflow application then sends instructions to the camera to advance the camera's state to represent the appropriate next workflow step on the camera. The steps that are completed on the camera may or may not involve human interaction.

The scope of camera-based workflow possibilities enabled by the present disclosure is large and diverse when one considers less commonly recognized image-creating features of digital cameras such as video, tripod motor movement, face-recognition, moving image tracking capabilities, or the like. Additionally, complex software capabilities hosted on the workflow server (e.g., artificial intelligence) allow for complex workflow steps to be completed on a camera with no human presence or interaction at the camera.

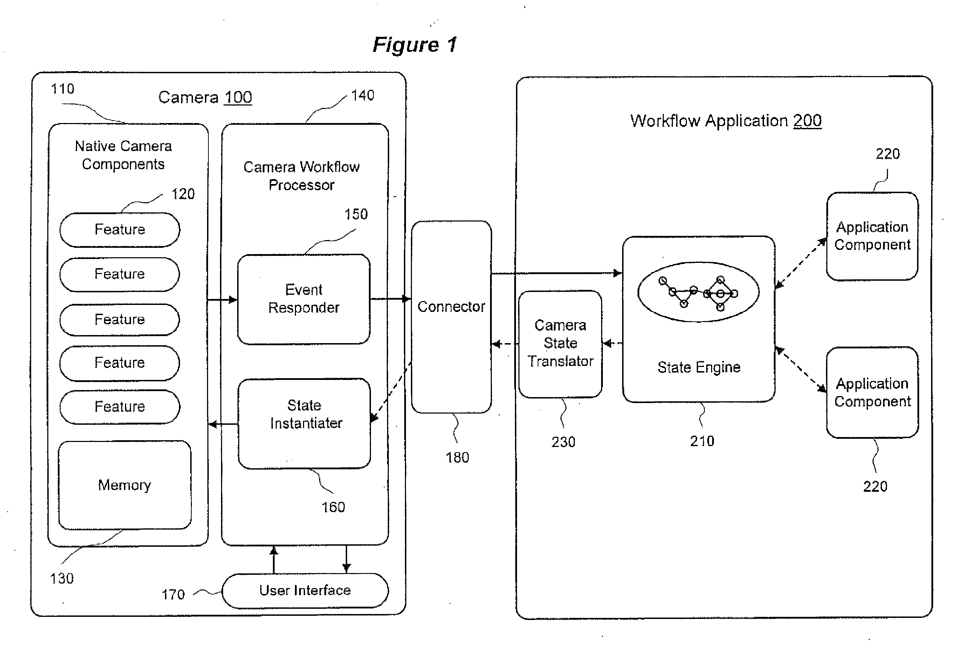

Figure 1 shows the components of an embodiment of the present disclosure. Camera 100 may be a stand-alone digital camera, or may reside in a mobile phone, Personal Digital Assistant (PDA), personal computer, or any other type of electronic or imaging device. The camera 100 may include native camera components 110, which may include various features of the camera 120 and a memory 130, and a camera workflow processor 140, which may include an event responder 150 and a state instantiater 160. If camera 100 is part of another electronic device (i.e., the aforementioned mobile phone, PDA, personal computer, or the like), the native camera components 110 may include the features of the aforementioned electronic devices. Such features may include, for example, contact list, speaker, voice recorder, calendar, or the like of the mobile phone, the files, settings, or the like of the personal computer, etc.

The native camera components 110 include digital camera features 120, which are features defined and manufactured by the camera manufacturer. In other words, a feature 120 is a component of the camera 100 that is involved in the creation, storage, manipulation, and/or transmission of digital imagery on the camera 100. Features 120 may include the features commonly associated with digital cameras such as, but not limited to, flash, shutter speed, aperture, resolution, Liquid Crystal Display (LCD) screen (i.e., touch, non-touch), lens zoom, mode (i.e., still, movie), face detection, or the like, and their associated settings and operations. Features 120 may also include a Global Positioning System (GPS), an internal clock, a tripod motor, a moving target tracker, or the like, and their associated settings and operations.

Memory 130, which is also a part of the native camera components 110, may be any form of computer memory such as, but not limited to, Random Access Memory (RAM), Read-Only Memory (ROM), or the like.

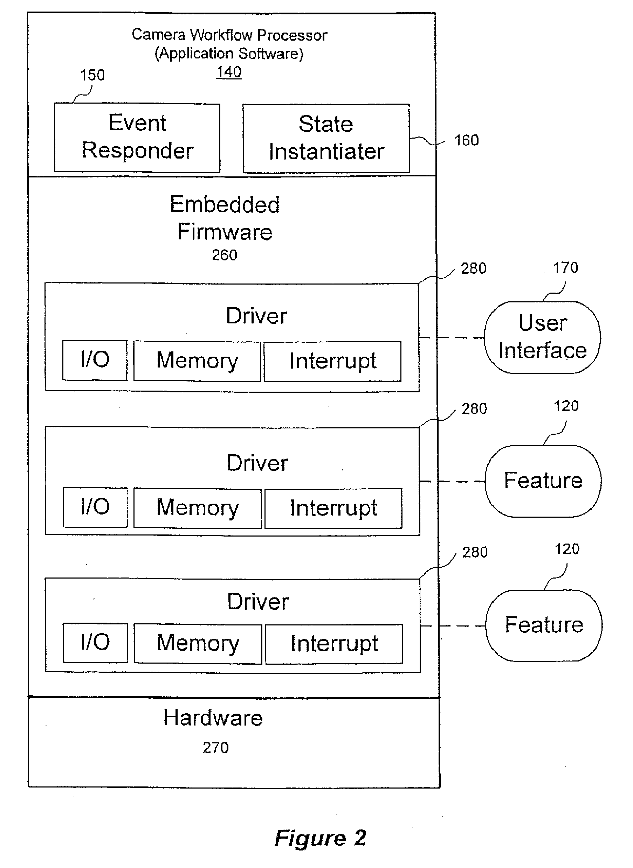

Figure 2 shows an embodiment of the camera workflow processor 140, which includes embedded firmware 260 and hardware 270. Embedded firmware 260 may be software installed on the camera 100 and specialize in exposing control of the camera's hardware and features 120 to application software. The embedded firmware 260 is specialized to the camera 100 and conventionally created by the manufacturer of the camera 100. Embedded software, which is generally installed in ROM memory, communicates with drivers 280 and hardware 270 components. The drivers 280 are software components that communicate directly with specific features 120 of the camera 100, and are specialized to each of the features 120. For example, an aperture motor may have its own driver 280, and an image sensor may have its own driver 280 as well. Each driver 280 communicates between a feature 120, the embedded firmware 260, and the hardware 270.

The hardware 270 sytem may include a central processing unit (CPU), memory, and any other components conventionally associated with computing hardware. In cameras, for example, hardware 270 may include a microprocessor (generalized chip with powerful CPU that is not specialized for particular types of computations), a microcontroller (microprocessor designed specifically for embedded systems, CPU, and memory (i.e., ROM, RAM, or both)), and a Digital Signal Processor (DSP) (designed specifically for discrete time-signal processing used for audio and video communications).

The camera workflow processor 140 is an application software component installed (for example, in ROM or RAM memory) on the camera 100. Application software is software written to communicate with the embedded firmware 260, and thus the features 120 and the hardware 270. Application software is often created by third parties to run software applications on different types of devices.

Camera workflow processor 140 serves as an intermediary between the workflow application 200 and the native camera components 110. The camera workflow processor 140 may include a state instantiater 160, which receives communication from the workflow application 200 and operates on native camera components 110. The state instantiater 160 interprets camera workflow instructions and changes the state of the camera's native camera components 110 in conformity with the instructions.

The event responder 150 responds to operation events of native camera components 110 and communicates with the state engine 210 of a workflow application 200. The operation events may originate from human interaction with a user interface 170 (i.e., taking a picture, turning the camera on, inputting data, or the like) or non-human camera operations (i.e., low battery reading, time of day reading, or the like). The event responder 150 uses camera workflow instructions to complete a workflow step on the camera 100, by responding to camera event or events, determining when a workflow step is completed (completion of a single event or a sequence of events), identifying the composition of output to send to the workflow server, writing output in format expected by the workflow server, and sending output using transmission protocol expected by the workflow server. In order to accomplish the aforementioned features, the event responder 150 may be implemented by a software engineering procedure described below with reference to the camera state translator 230. For example, the output sent to the workflow application 200 located on the workflow server is in a language or protocol which is specific to each participating workflow application. For example, it may be an open standard such as, but not limited to, Representational State Transfer (REST)-based web service or any language or protocol designed specifically for the workflow application.

The camera 100 communicates with a workflow application 200. The workflow application 200 is external to the camera 100 and can reside on a personal computer, a smart phone, a Personal Digital Assistant (PDA), a server, multiple nodes in a network, or the like. The communication between the camera 100 and workflow application 200 may be through a network as wireless or wired communication, or through a direct connection to the camera 100, server, or the like through a bluetooth connection, Universal Serial Bus (USB) cable, or the like. The camera 100 establishes this communication by way of a connector 180 that may be embodied as a camera docking station, network interface controller card, or the like.

The workflow application 200 may be located on a workflow server. In the present disclosure, workflow application 200 and workflow server may be used interchangably. The workflow server holds all logic of the workflow application 200, thus any changes to the workflow application 200 may require changes on the workflow server, but not on the camera 100. As a result, a plurality of cameras that use the workflow application 200 are seamlessly ready for any changes to the workflow application 200.

The workflow application 200 may include a state engine 210 that manages state and state transitions of the workflow application 200. Any suitable implementation may be used to implement the state engine 210, including, but not limited to, openWFE, Open Business Engine, IBM Websphere Process Server, and Microsoft Windows Workflow Foundation. The state engine 210 communicates with application component(s) 220. An application component 220 may be a database, file system, user directory, optical character recognition component, pattern recognition component, or the like. The application component 220 may further communicate with another system (not shown), located outside of the workflow server. Such system may be any type of system such as, but not limited to, a database, an image processing system, a computing system, or the like. The camera state translator 230 mediates communication from the state engine 210 of the workflow application 200 to the camera 100.

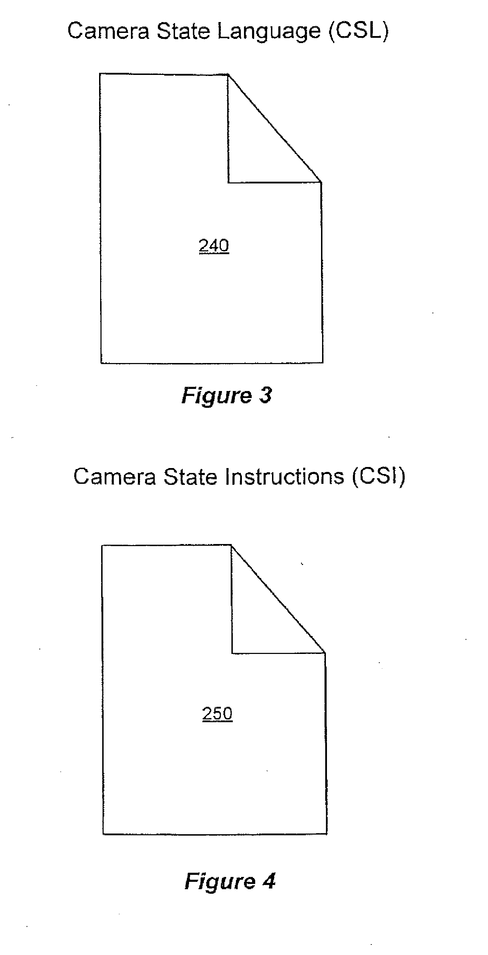

The camera state translator 230 converts state data into Camera State Instructions (CSI) 250, described below with reference to Figure 4. The conversion into CSI 250 may be done programmatically by writing application code to dynamically construct instructions from one of a superset of application states. This translation of state to instructions is implimented by software and hardware. For example, in an online banking application, a state may be: 1) user bank account balance showing funds, and 2) an amount a user requested to withdraw exceeds the user's balance. Thus, the online banking application converts a state into instructions sent to a web browser, which instruct (the instructions may be written in HyperText Markup Language (HTML), for example) the web browser to render a webpage stating that funds are insufficient, and prompting the user to retry with a withdrawal amount that is less than the stated balance. The present disclosure uses a similar "state to instructions" technique, but converts state to CSI 250, instead of converting to HTML. The conversion may be implemented, for example, by any industry-standard language, such as, but not limited to, Extensible Stylesheet Language Transformations (XSLT), Extensible Markup Language (XML), JavaScript Object Notation (JSON), or the like. In addition, the CSI 250 may include both machine-readable instructions and human-readable instructions.

The camera 100 has a Camera State Language (CSL) 240, shown in Figure 3, which describes the states, instructions, or capabilities of that particular camera 100 model. The CSL 240 is a machine-readable language that communicates with the states of the native camera components 110 and provides instructions to change the aforementioned states, responds to events, which, for example, may notify data to be collected in response to a particular event, and indicates how to output the data into a message to the workflow application 200.

As noted above, the CSL 240 is a machine-understandable ontology language that specifies instructions to the camera 100, and is understood by workflow application 200, located on the workflow server, and the camera 100. Examples of machine-understandable ontology include Business Process Execution Language (BPEL) and Gene Ontology (GO). The CSL 240 may be written by the camera manufacturer, workflow application designer, or any party with knowledge of the camera 100 and methods to computationally interact with the camera's components.

The CSL 240 may have an identification of native camera components 110 that may participate in a workflow step. For each identified native camera components 110, the CSL 240 may have attributes(s) of the component(s) that can be changed by the state instantiater 160. In addition, the CSL 240 may include, for each attribute, a range of states that attribute can have, how the state value is represented when written as camera output to the workflow application 200, or events that can change the state of the native camera components 110. The CSL 240 may specify, for each of the identified native camera components 110, an identification af component(s) with event(s) that may trigger the event responder 150 during a workflow step.

In addition, the CSL 240 may identify a single event or a sequence of multiple events that define the end of a workflow step, whereby the event responder 150 no longer responds to events and writes and then sends output to the workflow server. Furthermore, the CSL 240 may provide instruction(s) on how camera output to the workflow application 200 is represented for the workflow application 200 (this type of instruction may be an existing standard such as WebService Definition Language (WSDL) or Hypertext Transfer Protocol (HTTP) multipart request specification). Additionally, the CSL 240 may include a specification on how the camera output is transmitted (this type of specification may be an existing standard such as HTTP or File Transfer Protocol (FTP)).

The camera 100 has Camera State Instructions (CSI) 250, shown in Figure 4, which are single instances of instructions to change camera state, respond to camera events, collect data from the events, and output the data into a message to the workflow application 200.

The camera 100 communicates with a workflow server (which holds the workflow application 200) and acts as workflow client. The workflow steps, for example, are completed on the camera 100, and the output of each workflow step on the camera 100 is sent to the workflow application 200, located on the workflow server. The workflow server processes the output of the workflow step sent by the camera 100, and sends instructions for the next workflow step to the camera 100. The camera 100 responds to the instructions sent by the workflow application 200, on the workflow server, and the process repeats for multiple-step workflows.

The camera's workflow processor 140 interacts with the camera's native components 110 to complete workflow steps on the camera 100. The workflow processor 140 has state instantiater 160 which sets the state of the camera's native components 110 for a particular workflow step. In addition, the workflow processor 140 has event responder 150 which responds to an event or events in the native components 110 of the camera 100.

The event responder 150 sends, using the connector 180, a workflow step result to the workflow application 200, located on the workflow server. The workflow server processes the workflow step result of the camera 100 and transitions to the next workflow step. The workflow server contains camera state translator 230 that converts the next workflow into CSI 250 and sends the CSI 250 to the state instantiater 160 of the camera 100. The machine-readable CSI 250 represents one workflow step on a camera 100, and provides instructions to the camera 100 to complete a single workflow step.

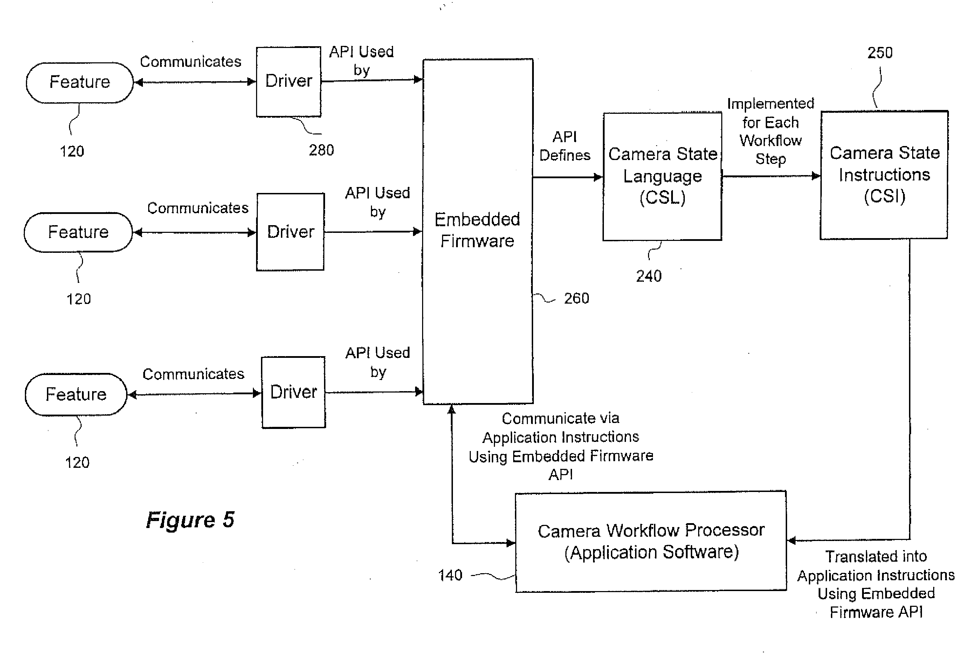

Figure 5 shows the relationships between the various components of the present disclosure, as shown in Figures 1-4. Note that Figure 5 shows logical relationships and not a sequence of events. As illustrated, each driver 280 communicates between the embedded firmware 260 and its respective feature 120. Drivers 280 expose an Application Program Interface (API) that allows the embedded firmware software to communicate with the driver software. Driver software may communicate with features 120 by reading/writing from/to memory in a processor that is mapped to its control and status registers that integrates with a feature 120 (i.e., Light-Emitting Diode (LED) lights).

The embedded firmware 260 may similarly expose its own API to application software, thereby allowing the two to communicate. The embedded firmware API is a composite of drivers 280 and other APIs. Embedded firmware API represents capabilities of application software to communicate with and operate on camera features 120 and hardware 270 (shown in Figure 2). These capabilities define the full set of ways a workflow application can interact with the camera. Likewise, the capabilities define the ontology of the CSL 240. The CSL 240 is considered during the design of a workflow application 200 as a full set of capabilities by which to build a workflow involving the camera 100.

During the operation of a workflow application 200, the camera state translator 230 of the workflow application 200 (shown in Figure 1) generates, for each workflow step, a particular instance of the CSL 240 as a CSI 250. The camera workflow processor 140 (which is not a hardware processor, but rather a software application component implemented by hardware), translates each CSI 250 into software instructions that implement the embedded firmware API. Running these software instructions causes the camera workflow processor 140 and the embedded firmware 260 (and thus, the features 120 and the hardware 270) to interact.

Note that the software translation of CSI 250 into software instructions that implement an API is a fundamental methodology in software design, development, and implementation. An example of this translation is a web application that receives data from an HTML form (which is comparable to the CSI 250 in this example), and runs program instructions that communicate to, for example, a bank's software system (i.e., in order to update bank account balance), using the API. Any computer-readable ontology (for example, XML) may be used as an instruction format in this sequence.

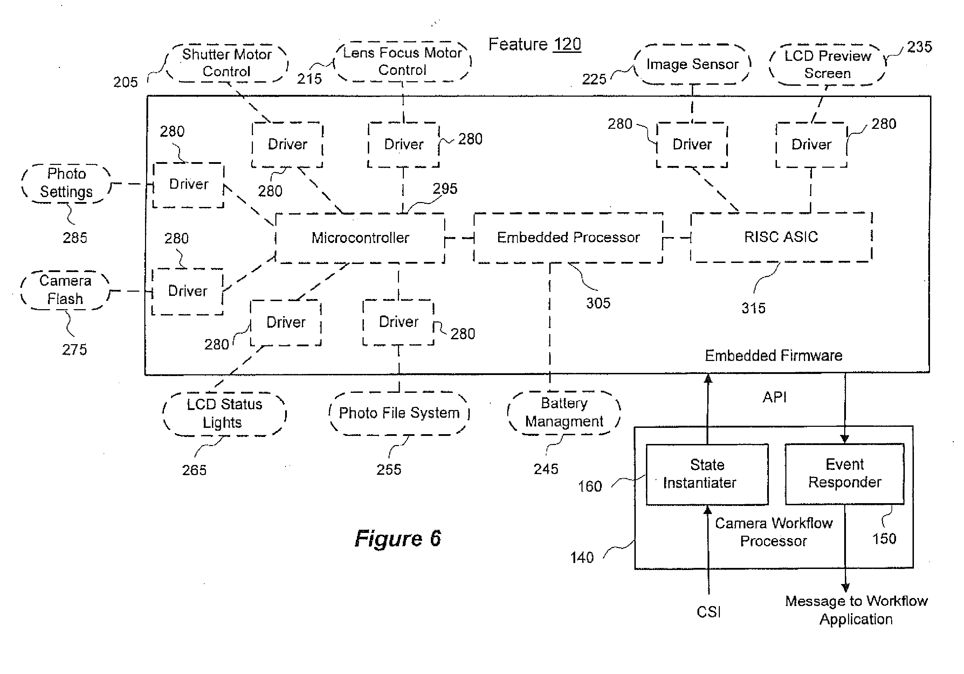

Figure 6 shows an embodiment of the present disclosure. Note that the dotted lines show camera software and hardware design which vary among camera models and manufacturers. Accordingly, the embedded firmware API, and thus the CSL 240 and the CSI 250, may also vary depending on the camera model and manufacturer.

In the embodiment of Figure 6, the camera 100 includes features 120 such as shutter motor control 205, lens focus motor control 215, image sensor 225, LCD preview screen 235, battery management 245, photo file system 255, LCD status lights 265, camera flash 275, and photo settings 285. As illustrated, each of the features 120 (except for the battery management 245 feature, which is connected directly to an embedded processor 305) is connected to a driver 280. In addition, some of the drivers 280 may be connected to a microcontroller 295, while others may be connected to a Reduced Instruction Set Computing Application-Specific Integrated Circuit (RISC ASIC) 315.

As noted above, and as further shown in Figure 6, each driver 280 communicates between embedded firmware 260 and each of the driver's aforemendentioned features 120. Driver software, through API(s), communicate with embedded firmware software. Similarly, embedded firmware 260 exposes its own API to application software, thereby allowing the two to communicate. The embedded firmware API is a composite of driver and other APIs.

Accordingly, through the use of an embedded firmware API, the drivers 280 may communicate with the state instantiater 160 and the event responder 150, which are part of the camera workflow processor 140. The details on the communication between the components denoted by solid lines, will be explained in more detail below.

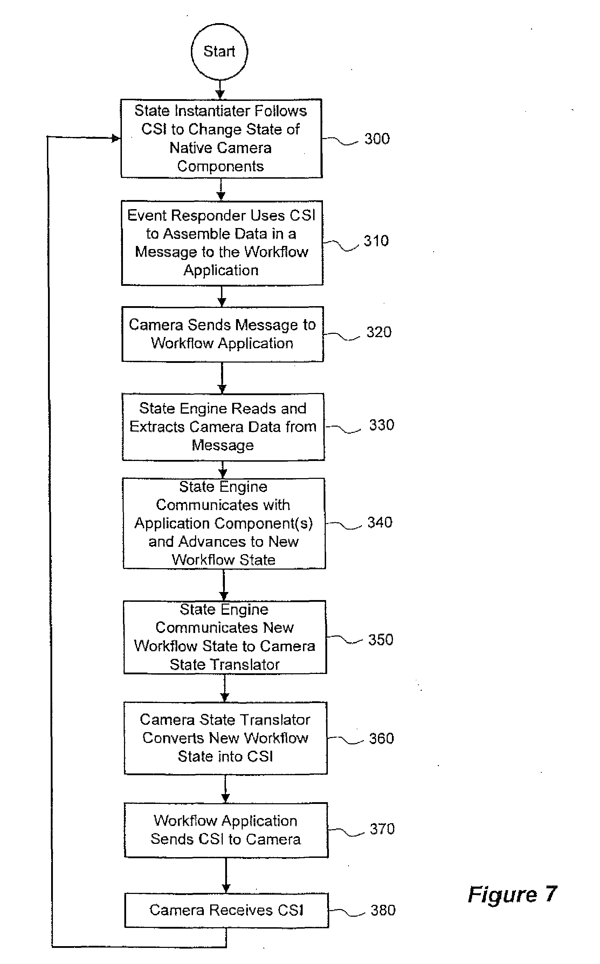

Figure 7 is a flow diagram outlining the steps of the communication between the camera 100 and the workflow application 200 in more detail.

First, at step 300, the state instantiater 160 on the camera 100 follows the CSI 250 to change the state of the native camera components 110. Next, at step 310, the event responder 150 of the camera 100 uses the CSI 250 to identify and respond to appropriate event(s) when event(s) occur, identify and collect appropriate data of the native camera component 110 state, assemble data in the form of a message to the workflow application 200, or the like.

At step 320, the camera 100 sends the message to the workflow application 200. The state engine 210 in the workflow application 200 reads and extracts camera data from the message, at step 330. The state engine 210 may use workflow state logic and camera data to communicate with application component(s) 220, and may advance to a new workflow state, in step 340. At step 350, the state engine 210 communicates the new workflow state to the camera state translator 230.

The camera state translator 230, at step 360, converts the new workflow state into CSI 250. The workflow application 200 then sends, in step 370, the CSI 250 to the camera 100. At step 380, the camera 100 receives the sent CSI 250, and the process may repeat, starting at step 300, or terminate if the CSI 250 indicates so to the camera 100.

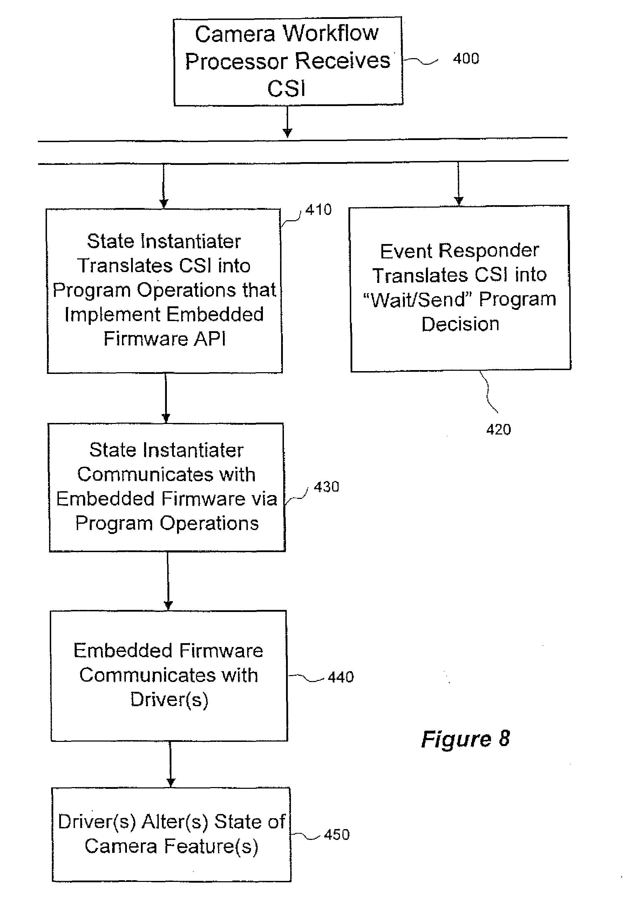

The sequence between step 380 and step 300 is illustrated in more detail in Figure 8. Figure 8 shows the sequence of events after the CSI 250 is received by the computer workflow processor 140. At step 400 of Figure 8, the camera workflow processor 140 receives the CSI 250. Note that step 400 of Figure 8 corresponds to step 380 of Figure 7. At step 410, the state instantiater 160 translates the CSI 250 into program operations that implement embedded firmware API. The CSI 250 is also translated into a "wait/send" program decision by the event responder 150, as shown in step 420. At step 430, the state instantiator 160 communicates with the embedded firmware via program operations. In turn, the embedded firmware communicates with driver(s) 280, as step 440. Next, at step 450, the driver(s) 280 alter(s) the state of native camera components 110, such as the feature(s) 120. Note that step 450 of Figure 8 corresponds to step 300 of Figure 7.

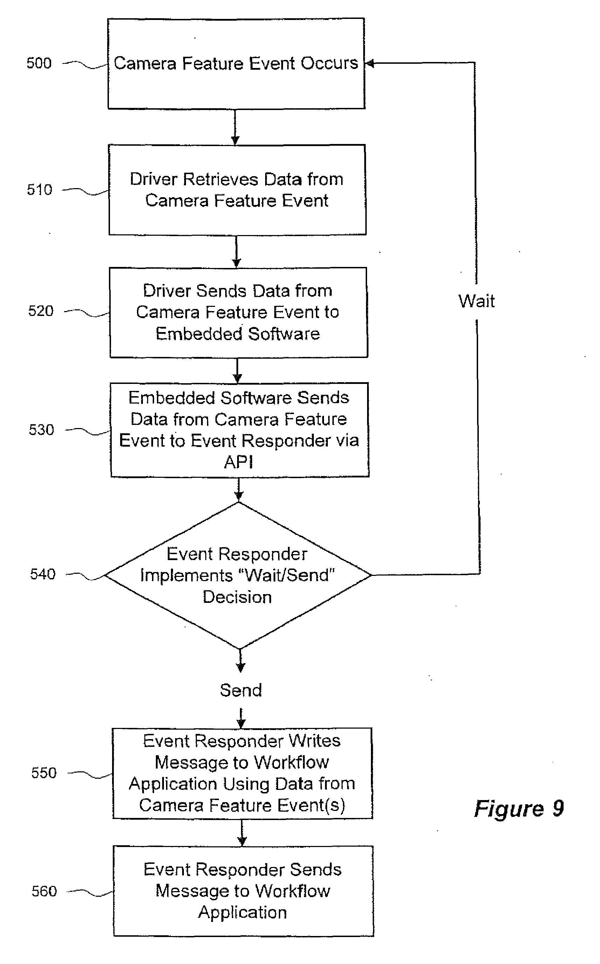

The sequence between step 310 and step 320 is illustrated in more detail in Figure 9. Figure 9 shows the sequence of events after the CSI 250 is received by the computer workflow processor 140. At step 500, a camera feature event occurs. A driver 280 retrieves data from the camera feature event, at step 510, and then, at step 530, sends data from the camera feature event to the embedded software. At step 540, the even responder 150 implements a "wait/send" decision. At this point, the camera 100 may "wait," in which case steps 500 to 540 may be repeated. Otherwise, the process moves to step 550, where the event responder 150 writes a message to the workflow application 200 using data from the camera feature event(s). Note that step 550 of Figure 9 corresponds to step 310 of Figure 7. Next, at step 560, the event responder 150 sends the message to the workflow application 200. Note that step 560 of Figure 9 corresponds to step 320 of Figure 7.

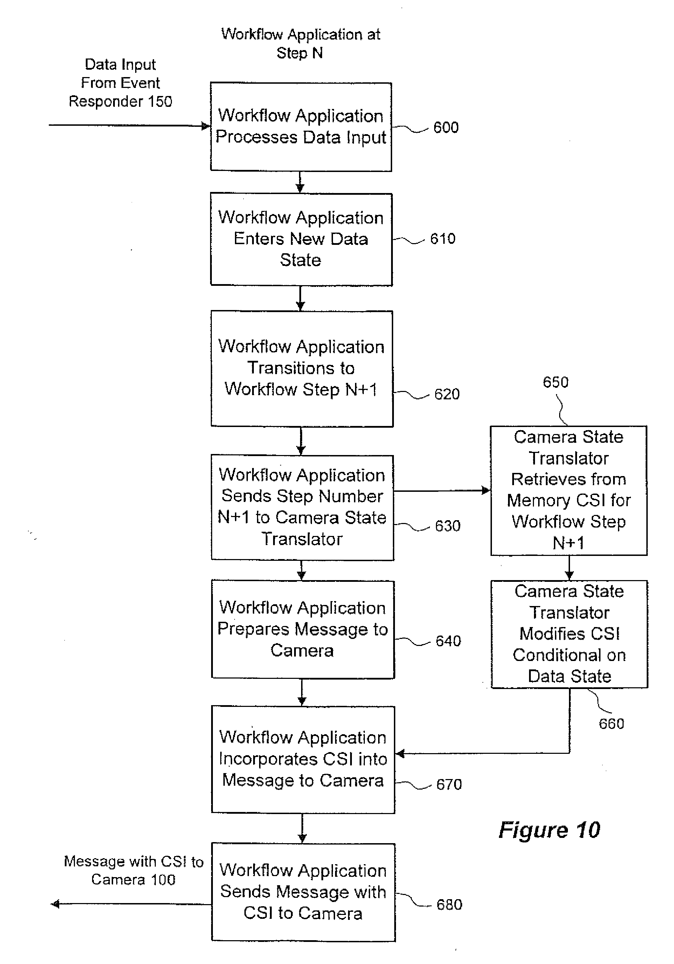

Figure 10 illustrates the sequence of steps of processing data input from the event responder 150 of the camera 100 to create a message, by the workflow application 200, that is sent back to the camera 100. When data is input from the event responder 150 to the state engine 210 of the workflow application 200, the workflow application 200 is at step "N" of the workflow. The workflow application 200 processes the input data at step 600, and the workflow application 200 thus enters a new data state, at step 610. Accordingly, at step 620, the workflow application 200 transitions to workflow step "N+1," and sends the step number "N+1" to the camera state translator 230, at step 630.

The workflow application 200 then prepares a message to be sent to camera 100, at step 640. At step 650, the camera state translator 230 retrieves, from memory, the CSI 250 for workflow step "N+1." At step 660, the camera state translator 230 modifies the CSI 250 conditional on the data state. Specifically, each workflow step in the workflow application 200 corresponds to a workflow step that will be instantiated on the camera 100, when the camera state instantiater 160 reads CSI 250, as explained above in Figure 8, for example. Each workflow step may have alternative data states and as such, the CSI 250 from memory may be modified conditional on the data state for the workflow step. As a non-limiting example, the data input from the camera 100 may be login credentials of the user for security reasons. The state engine 210 of the workflow application 200 processes the data and determines that the login is either valid or invalid. The modified CSI 250 that results from the aforementioned may include instructions to proceed (if the login is valid) or not proceed (if the login is invalid). Next, in step 670, the workflow application 200 incorporates the modified CSI 250 into the message prepared in step 640, and sends the message to the camera 100, at step 680.

One cycle of steps 300 to 380 (shown in Figure 7) indicates completion of one workflow step on the camera 100. The CSI 250, during step 300 of the first cycle of steps 300 to 380 (i.e., the instructions for the first workflow step), may either be installed on the camera and read when the camera is turned on, or may be sent from the workflow application 200. Step 300 may, for example, initialize the camera 100 for the first step in a single workflow application.

Alternatively, the first workflow step may initialize the camera 100 to an initialization state (step 300) that triggers the camera 100 to send a message to the workflow application 200 (step 320), which results in the CSI 250 being sent to the camera 100 (step 370). The CSI 250 may instruct the camera 100 to present multiple workflow applications to a user as "buttons" to select on a camera's 100 LCD screen.

Selecting one of the buttons sends a message to the workflow application 200 (step 320), which results in the CSI 250 being sent to the camera 100 (step 370), which in turn instructs the camera 100 to initialize for the first step in the workflow application, represented by the button that was selected.

Since resource intensive processing during any workflow step takes place on the workflow server, the camera 100 may participate in complex workflows that are not limited by the computation capabilities of the camera 100. In addition, in an embodiment, since the camera 100 is aware of a single step of the workflow at a time, the camera 100 may participate in workflows with an unlimited number of workflow steps.

Furthermore, a workflow step may be initiated by the camera 100 and completed after events occur on the camera 100. These events do not require human involvement. For example, the camera 100 may be instructed to take a picture with a specific setting, with no human intervention multi-step. Such feature allows fully automated workflows (i.e. no human interaction) to be completed with the camera 100.

Additionally, the workflow server may be centralized and may allow a plurality of cameras to participate in the same workflow. Moreover, the workflow server may allow a camera 100 to participate in a workflow along with other participants. For example, some workflow steps may be conducted by a user at a web browser and others by the camera 100.

Furthermore, image(s) taken by the camera 100 may be sent to the workflow application 200 during each workflow step. As a result, the images may be stored on the workflow server and thus there may be no storage limitation of images on the camera 100.

In a first non-limiting example of an embodiment of the present disclosure, a police officer arrives at a scene of a traffic accident. The officer has a camera and is ready to document the scene of the accident. The officer may select his/her name from a list on the camera's LCD screen (or perhaps identify himself/herself by a fingerprint scanner on the camera). The officer's identity is sent to the workflow server which sends back a description of a photograph to take at the scene. Such description may be determined by a number of factors such as, but not limited to, the kind of accident, the damage to the vehicles, the injuries sustained by the involved parties, the weather conditions, the time of day, or the like. The officer snaps a photograph using the camera, and sends the image to the workflow application (e.g., wirelessly via wide area network). Along with the photograph, other relevant data extracted from the camera (e.g., GPS coordinates, date and time, camera settings, etc) may be sent. Image pattern recognition software on the workflow server, for example, may determine that the photograph is not adequate. In that case, the workflow application sends a message back to the camera stating to the officer that the image was inadequate. The message may be accompanied by instructions for the camera to automatically adjust settings to improve the photograph. The camera implements the instructions, and the officer retakes the photograph and again sends it to the workflow application. The workflow application now accepts the photograph, stores it in a digital repository with associated information (e.g., GPS coordinates, date and time, officer's name, camera settings, etc), and sends instructions to the camera (and the officer) on the next step of the workflow. This processes may repeat until the workflow is complete.

In a second non-limiting example of an embodiment of the present disclosure, a crime scene investigating team arrives at the scene of a crime. Just as in the previous example, the team may have one or more cameras prepared to document the crime scene. Note that, although the following description references one camera, it is to be understood that multiple cameras can be used concurrently to detail different parts of the crime scene, and to communicate with one workflow server or a plurality of workflow servers.

A member of the investigating team may select his/her name from a list on the camera's screen (or perhaps identify himself/herself by a fingerprint scanner on the camera). The identity of the member of the crime investigating team is sent to the workflow server. The user may also send additional information along to the workflow server, such as, but not limited to, the type of crime (i.e., homicide, arson, battery, assault, larceny, fraud, or the like) that took place, the date and time, the location (i.e., indoors, outdoors, a specific address, or the like), or any other circumstances.

Based on such factors, the workflow server sends back a description of a photograph (or a plurality of photographs) to take at the scene. Such description may be a generic checklist (i.e., take photographs of bodies, blood spatter, location, surrounding area, fingerprints, areas that may contain potential DNA samples, or the like) or a detailed process of capturing a quality image given the present circumstances (i.e., based on location, time of day, amount of light, or the like). Accordingly, the user may receive specific guidance through each step of capturing a photograph. For example, the workflow server may send instructions to the camera to turn flash off, zoom-out, turn auto-focus on, and select night-mode. Additionally, the workflow server may send human-readable instructions to the user describing the proper way to capture the image (i.e., stand 3 feet away, capture the right side of the body of a victim, or the like). The human-readable instructions may be displayed on a display unit of the camera, such as, but not limited to, an LCD display.

As outlined above with respect to the first example, the user may send the acquired image to the workflow server and the workflow server may, in turn, respond by sending instructions on re-acquiring the image, acquiring a new image, or informing the camera (and the user) that all of the needed images have been acquired and that the workflow process is complete.

In the case of a member of the crime investigating team who is in charge of locating and obtaining fingerprints, a camera of the present disclosure may also be used. The fingerprint examiner may take photographs of the different areas where fingerprints are found. Acquiring such photographs may be similar to the above examples of acquiring images. In addition, however, the fingerprint examiner may also lift a fingerprint or a plurality of fingerprints and, using the camera, scan the fingerprint (either using a separate device connected to the camera or by inserting the fingerprint directly into a fingerprint port on the camera) and send it to the workflow server. The workflow server may analyze the fingerprint by checking for clarity. Additionally, the workflow server, using the applications component(s), may send the fingerprint to an image processing system which can analyze the fingerprint more in-depth. If the quality of the fingerprint is insufficient, the workflow application may send back instructions to the fingerprint examiner to scan the fingerprint again, to find another fingerprint of better quality, or the like. The workflow server may also send the fingerprint to yet another system (i.e., a local fingerprint database, the Federal Bureau of Investigation (FBI) fingerprint database, or the like). Such system may perform an initial fingerprint comparison with the other samples in the database to see if it yields a match. Furthermore, the fingerprint (along with any other photographs taken at the crime scene) may be sent to a local police database and input into a digital file for the case, as the photographs are being taken at the scene. Since photographs are being saved and input into a database as they are being acquired, altering of the images or loss of the images may be prevented.

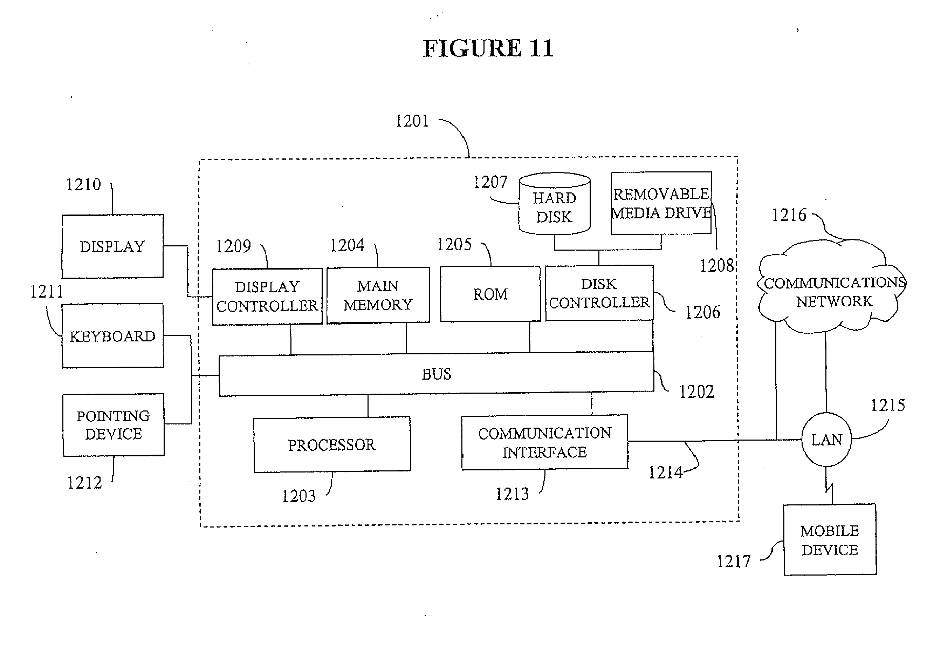

Figure 11 illustrates a computer system 1201 upon which an embodiment of the present disclosure may be implemented. The computer system 1201 includes a disk controller 1206 coupled to the bus 1202 to control one or more storage devices for storing information and instructions, such as a magnetic hard disk 1207, and a removable media drive 1208 (e.g., floppy disk drive, read-only compact disc drive, read/write compact disc drive, compact disc jukebox, tape drive, and removable magneto-optical drive). The storage devices may be added to the computer system 1201 using an appropriate device interface (e.g., small computer system interface (SCSI), integrated device electronics (IDE), enhanced-IDE (E-IDE), direct memory access (DMA), or ultra-DMA).

The computer system 1201 may also include special purpose logic devices (e.g., application specific integrated circuits (ASICs)) or configurable logic devices (e.g., simple programmable logic devices (SPLDs), complex programmable logic devices (CPLDs), and field programmable gate arrays (FPGAs)).

The computer system 1201 may also include a display controller 1209 coupled to the bus 1202 to control a display 1210, such as the touch panel display or a liquid crystal display (LCD), for displaying information to a computer user. The computer system includes input devices, such as a keyboard 1211 and a pointing device 1212, for interacting with a computer user and providing information to the processor 1203. The pointing device 1212, for example, may be a mouse, a trackball, a finger for a touch screen sensor, or a pointing stick for communicating direction information and command selections to the processor 1203 and for controlling cursor movement on the display 1210. In addition, a printer may provide printed listings of data stored and/or generated by the computer system 1201.

The computer system 1201 performs a portion or all of the processing steps of the present disclosure in response to the processor 1203 executing one or more sequences of one or more instructions contained in a memory, such as the main memory 1204. Such instructions may be read into the main memory 1204 from another computer readable medium, such as a hard disk 1207 or a removable media drive 1208. One or more processors in a multi-processing arrangement may also be employed to execute the sequences of instructions contained in main memory 1204. In alternative embodiments, hard-wired circuitry may be used in place of or in combination with software instructions. Thus, embodiments are not limited to any specific combination of hardware circuitry and software.

As stated above, the computer system 1201 includes at least one computer readable medium or memory for holding instructions programmed according to the teachings of the present disclosure and for containing data structures, tables, records, or other data described herein. Examples of computer readable media are compact discs, hard disks, floppy disks, tape, magneto-optical disks, PROMS (EPROM, EEPROM, flash EPROM), DRAM, SRAM, SDRAM, or any other magnetic medium, compact discs (e.g., CD-ROM), or any other optical medium, punch cards, paper tape, or other physical medium with patterns of holes.

Stored on any one or on a combination of computer readable media, the present disclosure includes software for controlling the computer system 1201, for driving a device or devices for implementing the invention, and for enabling the computer system 1201 to interact with a human user (e.g., print production personnel). Such software may include, but is not limited to, device drivers, operating systems, development tools, and applications software. Such computer readable media further includes the computer program product of the present disclosure for performing all or a portion (if processing is distributed) of the processing performed in implementing the invention.

The computer code devices of the present embodiments may be any interpretable or executable code mechanism, including but not limited to scripts, interpretable programs, dynamic link libraries (DLLs), Java classes, and complete executable programs. Moreover, parts of the processing of the present embodiments may be distributed for better performance, reliability, and/or cost.

The term "computer readable medium" as used herein refers to any non-transitory medium that participates in providing instructions to the processor 1203 for execution. A computer readable medium may take many forms, including but not limited to, non-volatile media or volatile media. Non-volatile media includes, for example, optical, magnetic disks, and magneto-optical disks, such as the hard disk 1207 or the removable media drive 1208. Volatile media includes dynamic memory, such as the main memory 1204. Transmission media, on the contrary, includes coaxial cables, copper wire and fiber optics, including the wires that make up the bus 1202. Transmission media also may also take the form of acoustic or light waves, such as those generated during radio wave and infrared data communications.

Various forms of computer readable media may be involved in carrying out one or more sequences of one or more instructions to processor 1203 for execution. For example, the instructions may initially be carried on a magnetic disk of a remote computer. The remote computer can load the instructions for implementing all or a portion of the present disclosure remotely into a dynamic memory and send the instructions over a telephone line using a modem. A modem local to the computer system 1201 may receive the data on the telephone line and use an infrared transmitter to convert the data to an infrared signal. An infrared detector coupled to the bus 1202 can receive the data carried in the infrared signal and place the data on the bus 1202. The bus 1202 carries the data to the main memory 1204, from which the processor 1203 retrieves and executes the instructions. The instructions received by the main memory 1204 may optionally be stored on storage device 1207 or 1208 either before or after execution by processor 1203.

The computer system 1201 also includes a communication interface 1213 coupled to the bus 1202. The communication interface 1213 provides a two-way data communication coupling to a network link 1214 that is connected to, for example, a local area network (LAN) 1215, or to another communications network 1216 such as the Internet. For example, the communication interface 1213 may be a network interface card to attach to any packet switched LAN. As another example, the communication interface 1213 may be an asymmetrical digital subscriber line (ADSL) card, an integrated services digital network (ISDN) card or a modem to provide a data communication connection to a corresponding type of communications line. Wireless links may also be implemented. In any such implementation, the communication interface 1213 sends and receives electrical, electromagnetic or optical signals that carry digital data streams representing various types of information.

The network link 1214 typically provides data communication through one or more networks to other data devices. For example, the network link 1214 may provide a connection to another computer through a local network 1215 (e.g., a LAN) or through equipment operated by a service provider, which provides communication services through a communications network 1216. The local network 1214 and the communications network 1216 use, for example, electrical, electromagnetic, or optical signals that carry digital data streams, and the associated physical layer (e.g., CAT 5 cable, coaxial cable, optical fiber, etc.). The signals through the various networks and the signals on the network link 1214 and through the communication interface 1213, which carry the digital data to and from the computer system 1201 may be implemented in baseband signals, or carrier wave based signals. The baseband signals convey the digital data as unmodulated electrical pulses that are descriptive of a stream of digital data bits, where the term "bits" is to be construed broadly to mean symbol, where each symbol conveys at least one or more information bits. The digital data may also be used to modulate a carrier wave, such as with amplitude, phase and/or frequency shift keyed signals that are propagated over a conductive media, or transmitted as electromagnetic waves through a propagation medium. Thus, the digital data may be sent as unmodulated baseband data through a "wired" communication channel and/or sent within a predetermined frequency band, different than baseband, by modulating a carrier wave. The computer system 1201 can transmit and receive data, including program code, through the network(s) 1215 and 1216, the network link 1214 and the communication interface 1213. Moreover, the network link 1214 may provide a connection through a LAN 1215 to a mobile device 1217 such as a personal digital assistant (PDA) laptop computer, or cellular telephone.

Further, it should be appreciated that the exemplary embodiments of the present disclosure are not limited to the exemplary embodiments shown and described above. While this invention has been described in conjunction with exemplary embodiments outlined above, various alternatives, modifications, variations and/or improvements, whether known or that are, or may be, presently unforeseen, may become apparent. Accordingly, the exemplary embodiments of the present disclosure, as set forth above are intended to be illustrative, not limiting. The various changes may be made without departing from the spirit and scope of the invention. Therefore, the disclosure is intended to embrace all now known or later-developed alternatives, modifications, variations and/or improvements.

## Claims

1. An imaging device communicating with an apparatus hosting a workflow application, the imaging device comprising:
a state instantiater configured to receive an imaging device instruction from the apparatus, and to change a state of an imaging device feature of the imaging device in accordance with the imaging device instruction;
an event responder configured to assemble data in a message based on the changed state of the imaging device feature; and
an interface configured to send the message to the apparatus.

2. The imaging device of Claim 1, wherein
the imaging device is a camera, and
the imaging device feature is at least one of a shutter motor control, a lens focus motor control, an image sensor, a Liquid Crystal Display (LCD) preview screen, a battery management component, a photo file component, an LCD status light, a camera flash, and a photo setting.

3. The imaging device of Claim 1, or 2, wherein
the state instantiater is further configured to receive a second imaging device instruction from a second apparatus, and to change a state of a second imaging device feature of the imaging device in accordance with the second imaging device instruction;
the event responder is further configured to assemble second data in a second message based on the changed state of the second imaging device feature; and
the interface is further configured to send the second message to the second apparatus.

4. An apparatus hosting a workflow application, the apparatus comprising:
a state engine configured to read and extract data from a first message received from an imaging device;
an application component configured to perform a function based on the read and extracted data, and to send a first result of the function to the state engine;
a state translator configured to receive the first result from the state engine, to convert the first result into an imaging device instruction, and to send the imaging device instruction to the imaging device; and
an interface configured to receive a second message from the imaging device, the second message corresponding to a second result based on the imaging device instruction.

5. The apparatus of claim 4, wherein the application component is further configured to communicate with a second system located outside of the apparatus.

6. The apparatus of claim 4 or 5, wherein the application component corresponds to one of a database, a file system, a user directory, an optical character recognition component, and a pattern recognition component.

7. The apparatus of claim 4, 5 or 6, wherein
the state engine is further configured to read and extract second data from a third message received from a second imaging device,
the application component is further configured to perform a second function based on the read and extracted second data, and to send a third result of the second function to the state engine,
a state translator further configured to receive the third result from the state engine, to convert the third result into a second imaging device instruction, and to send the second imaging device instruction to the second imaging device, and
the interface is further configured to receive a fourth message from the second imaging device, the fourth message corresponding to a fourth result based on the second imaging device instruction.

8. A system for communicating between an apparatus hosting a workflow application and an imaging device, the system comprising an imaging device according to claims 1, 2, or 3, and:
a state engine, at the apparatus, configured to read and extract data from a first message received from the imaging device, to communicate with an application component, and to advance to a workflow state; and
a state translator, at the apparatus, configured to receive the workflow state from the state engine, to convert the workflow state into an imaging device instruction, and to send the imaging device instruction to the imaging device;
wherein the state instantiater, at the imaging device, is configured to change a state of a component of the imaging device in accordance with the imaging device instruction;
the event responder, at the imaging device, is configured to assemble data in a second message based on the changed state of the component of the imaging device; and
the interface, at the imaging device, is configured to send the second message to the apparatus.

9. The system of claim 8, wherein
the imaging device is a camera, and
the component of the imaging device is at least one of a shutter motor control, a lens focus motor control, an image sensor, a Liquid Crystal Display (LCD) preview screen, a battery management component, a photo file component, an LCD status light, a camera flash, and a photo setting.

10. The system of claim 8 or 9, wherein the application component is further configured to communicate with a second system located outside of the apparatus.

11. The system of claim 8, 9 or 10, wherein the application component corresponds to one of a database, a file system, a user directory, an optical character recognition component, and a pattern recognition component.

12. The system of any one of claims, 8 to 11 further comprising:
a display unit, at the imaging device, configured to display the imaging device instruction which includes human-readable language.

13. A method for an apparatus hosting a workflow application, the method comprising:
reading and extracting data from a first message received from an imaging device;
performing a function based on the read and extracted data, and sending a first result of the function to the state engine;
converting the first result into an imaging device instruction, and sending the imaging device instruction to the imaging device; and
receiving a second message from the imaging device, the second message corresponding to a second result based on the imaging device instruction.

14. The method of Claim 13, further comprising:
changing a state of a component of the imaging device in accordance with the imaging device instruction.

15. The method of Claim 12 or 13, further comprising:
reading and extracting second data from a third message received from a second imaging device;
performing a second function based on the read and extracted second data, and sending a third result of the second function to the state engine;
converting the third result into a second imaging device instruction, and sending the second imaging device instruction to the second imaging device; and
receiving a fourth message from the second imaging device, the fourth message corresponding to a fourth result based on the second imaging device instruction.
